# EUROPEAN PATENT APPLICATION

(11) **EP 0 876 073 A2**
(43) Date of publication of application: **04.11.1998**
(21) Application number: 98303466.1
(22) Date of filing: 01.05.1998
(51) Int. Cl.: H04Q 7/32, H04Q 7/22

(54) **Dual-mode telephone for cordless and cellular networks**

(30) Priority: 01.05.1997 US 847196; 31.12.1997 US 1363
(71) Applicant: AT&T Corp., New York, NY 10013-2412 (US)
(72) Inventor: Gerszberg, Irwin, Kendall Park, New Jersey 08824 (US); Javitt, Joel I., Hillside, New Jersey 07205 (US); Martin, Jeffrey S., Dover, New Jersey 07801 (US); Miller, Robert Raymond, II, Convent Station, New Jersey 07960 (US); Walker, Hopeton S., Haledon, New Jersey 07508 (US); Wallace, Edward L., South Orange, New Jersey 07079 (US)
(74) Representative: Suckling, Andrew Michael

(57) **Abstract**

A cordless telephone network for wirelessly linking with a wireless phone. The cordless telephone network may include a plurality of wireless base stations, the base stations preferrably being disposed at customer premises such as private residences and/or businesses. A wireless phone linked to the cordless telephone network may roam between the wireless base stations and/or between the cordless telephone network and any other wireless network such as a conventional cellular phone network.

## Description

### Field of the Invention

This invention discloses the a wireless capability for the intelligent services director to interface with a plurality of cordless telephones enabling the range of the cordless telephone to increase by using other user's intelligent services director to act as the base station.

### Background

There is a need for improved architectures, services and equipment utilized to distinguish interexchange companies' products and services. For instance, there exists a need for extending the range of cordless telephones beyond the relatively short distances supported by current cordless base stations. Currently, analog cordless phones typically have a range of up to several hundred feet, and digital cordless phones (e.g., those phones operating in the 900 MHz spectrum) typically have only a slightly longer range capability. Unfortunately, this range may be too short for even short trips away from a cordless base station. Thus, users who are waiting on calls from third parties are restricted to the limited range of the cordless telephone or must use an expensive cellular phone. Furthermore, users often need to provide several telephone numbers to a third party, for instance, one for a residence/office telephone and one for a cellular telephone.

Another problem is that conventional cellular base stations operated by cellular telephone service providers are becoming overloaded as more users purchase cellular phones. To accomodate additional users, either more cellular base stations must be built, or else the operating bandwidth of the cellular base stations must be increased or otherwise used more efficiently. Both of these options are expensive. Also, large cellular base stations may reduce the values of nearby residential properties.

### Summary of the Invention

In order to provide an improved network, it is desirable for the interexchange companies to have access to at least one of the twisted-pair lines or alternate wireless facility connecting each of the individual users to the local telephone network before the lines are routed through the conventional local telephone network equipment. It is preferable to have access to these lines prior to the splitter and modem technology offered by the local service providers. By having access to the twisted-pair wires entering the customer's premises, interexchange companies can differentiate their services by providing higher bandwidth, improving the capabilities of the customer premises equipment, and lowering overall system costs to the customer by providing competitive service alternatives.

The new architecture may utilize a video phone and/or other devices to provide new services to an end user; an intelligent services director (ISD) disposed near the customer's premises for multiplexing and coordinating many digital services onto a single twisted-pair line; a facilities management platform (FMP) disposed in the local telephone network's central office for routing data to an appropriate interexchange company network; and a network server platform (NSP) coupled to the FMP for providing new and innovative services to the customer and for distinguishing services provided by the interexchange companies from those services provided by the local telephone network.

As part of this system, one aspect of the invention provides a way to solve many of the problems associated with the current cordless telephone market. Wireless telephones are known that are capable of operating in both a first radiotelephone communication system including a first base station having a wide area of coverage and in a second radiotelephone communication system including a second base station having a localized area of coverage. See, for example, U.S. Patent No. 5,406,615 to Miller, II et al., entitled, "Multi-Band Wireless Radiotelephone Operative in a Plurality of Air Interface of Difference Wireless Communications Systems," which is hereby incorporated by reference. In the present invention, the intelligent services director may have a wireless interface. A plurality of intelligent services directors having wireless interfaces may define part of a cordless telephone network. Thus, a wireless telephone coupled with this cordless telephone network may roam within the range of the cordless telephone network, which may be considerably longer than a conventional cordless base station.

In further aspects of the invention, a wireless telephone may switch between the cordless telephone network and a conventional cellular network, between various cordless telephone networks, and/or between various conventional cellular networks.

### Brief Description of the Drawings

The foregoing summary of the invention, as well as the following detailed description of preferred embodiments, is better understood when read in conjunction with the accompanying drawings, which are included by way of example, and not by way of limitation with regard to the claimed invention.

Fig. 1 illustrates an embodiment of a hybrid fiber twisted pair local loop architecture.

Fig. 2 is a block diagram of an embodiment of an intelligent services director consistent with the architecture shown in Fig. 1.

Fig. 3A and 3B illustrate an embodiment of a video phone consistent with the architecture shown in Fig. 1.

Fig. 4A is a block diagram of an embodiment of a facilities management platform consistent with the architecture shown in Fig. 1.

Fig. 4B illustrates a block diagram of an embodiment of a network server platform consistent with the architecture shown in Fig. 1.

Fig. 5 illustrates an embodiments of a wireless telephone capable of linking with a cordless telephone network.

Fig. 6 illustrates an embodiment of a wireless telephone consistent with Fig. 5 linking with a cordless telephone network.

### Detailed Description of Preferred Embodiments

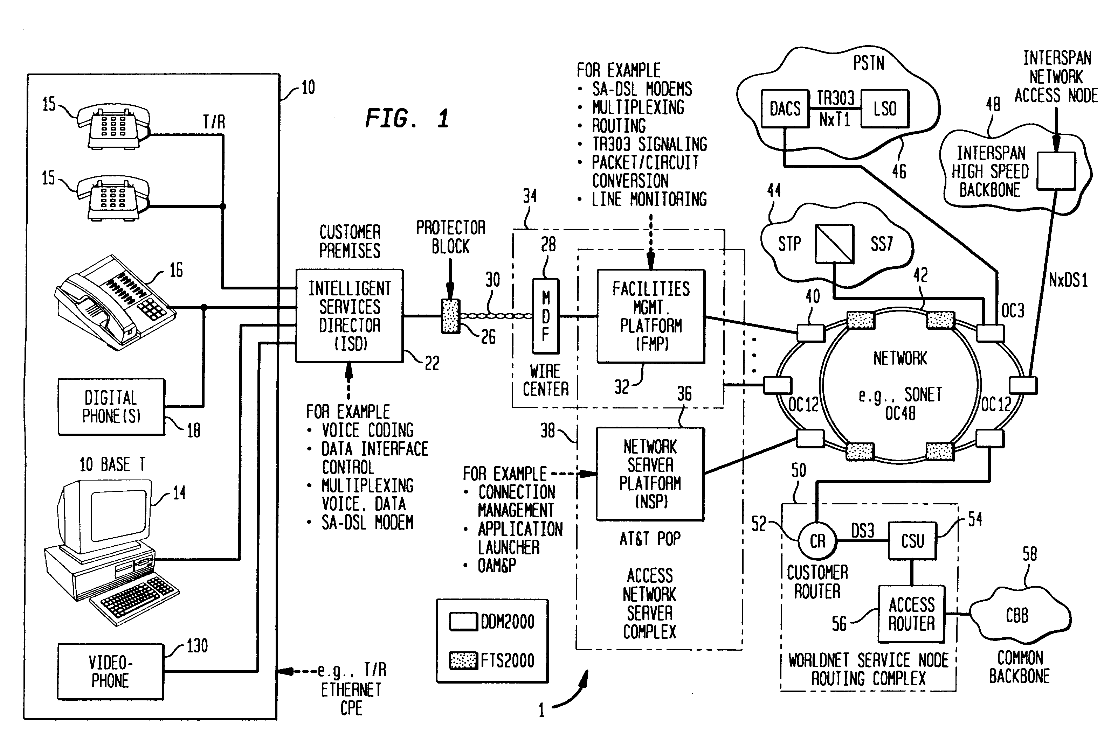

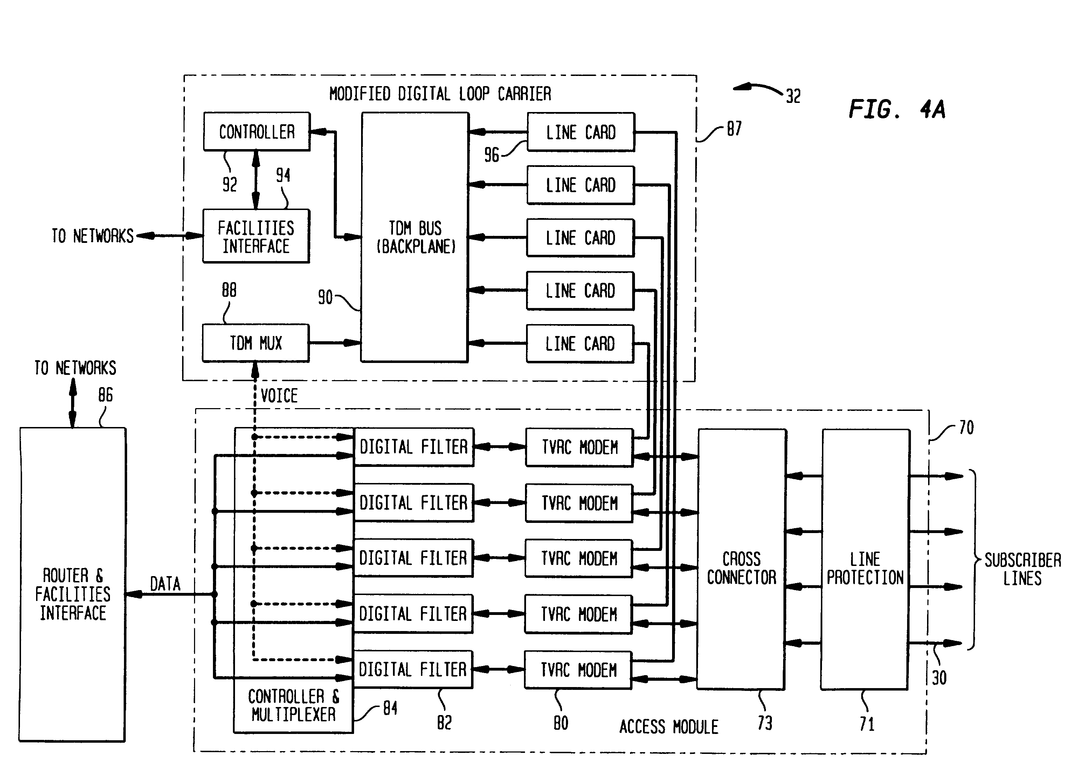

Referring to Fig. 1, a first exemplary communication network architecture employing a hybrid fiber, twisted-pair (HFTP) local loop 1 architecture is shown. An intelligent services director (ISD) 22 may be coupled to a central office 34 via a twisted-pair wire, hybrid fiber interconnection, wireless and/or other customer connection 30, a connector block 26, and/or a main distribution frame (MDF) 28. The ISD 22 and the central or local office 34 may communicate with each other using, for example, framed, time division, frequency-division, synchronous, asynchronous and/or spread spectrum formats, but in exemplary embodiments uses DSL modem technology. The central office 34 preferably includes a facilities management platform (FMP) 32 for processing data exchanged across the customer connection 30. The FMP 32 may be configured to separate the plain old telephone service (POTS) from the remainder of the data on the customer connection 30 using, for example, a tethered virtual radio channel (TVRC) modem (shown in Fig. 4A). The remaining data may be output to a high speed backbone network (e.g., a fiber-optic network) such as an asynchronous transfer mode (ATM) switching network. The analog POTS data may be output directly to a public switch telephone network (PSTN) 46, and/or it may be digitized, routed through the high speed backbone network, and then output to the PSTN 46.

The FMP 32 may process data and/or analog/digitized voice between customer premise equipment (CPE) 10 and any number of networks. For example, the FMP 32 may be interconnected with a synchronous optical network (SONET) 42 for interconnection to any number of additional networks such as an InterSpan backbone 48, the PSTN 46, a public switch switching network (e.g. call setup SS7-type network 44), and/or a network server platform (NSP) 36. Alternatively, the FMP 32 may be directly connected to any of these networks. One or more FMPs 32 may be connected directly to the high speed backbone network (e.g., direct fiber connection with the SONET network 42) or they may be linked via a trunk line (e.g., trunks 40 or 42) to one or more additional networks.

The NSP 36 may provide a massive cache storage for various information that may be provided across the SONET net 42 to the FMP 32 and out to the ISD 22. The NSP 36 and the FMP 32 may collectively define an access network server complex 38. The NSP 36 may be interconnected with multiple FMPs 32. Furthermore, each FMP 32 may interconnect with one or more ISDs 22. The NSP 36 may be located anywhere but is preferably located in a point-of-presence (POP) facility. The NSP 36 may further act as a gateway to, for example, any number of additional services.

The ISD 22 may be interconnected to various devices such as a videophone 130, other digital phones 18, set-top devices, computers, and/or other devices comprising the customer premise equipment 10. The customer premise equipment may individually or collectively serve as a local network computer at the customer site. Application applets may be downloaded from the NSP 36 into some or all of the individual devices within the customer premise equipment 10. Where applets are provided by the NSP 36, the programming of the applets may be updated such that the applets are continually configured to the latest software version by the interexchange carrier. In this way, the CPE 10 may be kept up to date by simply re-loading updated applets. In addition, certain applets may be resident on any of the CPE 10. These resident applets may be periodically reinitialized by simply sending a request from, for example, a digital phone 18 and/or a videophone 130 to the FMP 32 and thereafter to the NSP 36 for reinitialization and downloading of new applets. To ensure widespread availability of the new features made possible by the present architecture, the customer premise equipment may be provided to end users either at a subsidized cost or given away for free, with the cost of the equipment being amortized over the services sold to the user through the equipment.

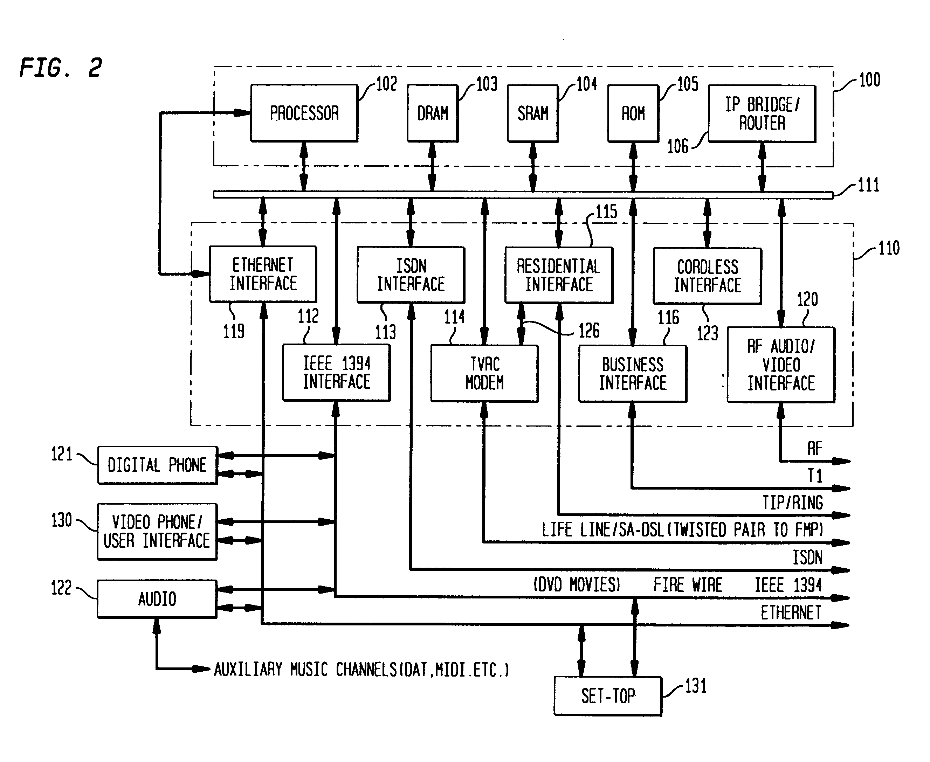

Referring to Fig. 2, the ISD 22 may connect with a variety of devices including analog and digital voice telephones 15, 18; digital videophones 130, devices for monitoring home security, meter reading devices (not shown), utilities devices/energy management facilities (not shown), facsimile devices 16, personal computers 14, and/or other digital or analog devices. Some or all of these devices may be connected with the ISD 22 via any suitable mechanism such as a single and/or multiple twisted-pair wires and/or a wireless connection. For example, a number of digital devices may be multi-dropped on a single twisted-pair connection. Similarly, analog phones and other analog devices may be multi-dropped using conventional techniques.

The ISD 22 may be located within the home/business or mounted exterior to the home/business. The ISD 22 may operate from electrical power supplied by the local or central office 34 and/or from the customer's power supplied by the customer's power company. Where the ISD 22 includes a modem, it may be desirable to power the ISD 22 with supplemental power from the home in order to provide sufficient power to enable the optimal operation of the modem.

As shown in Fig. 2, in some embodiments the ISD 22 may include a controller 100 which may have any of a variety of elements such as a central processing unit 102, a DRAM 103, an SRAM 104, a ROM 105 and/or an internet protocol (IP) bridge router 106 connecting the controller 100 to a system bus 111. The system bus 111 may be connected with a variety of network interface devices 110. The network interface devices 110 may be variously configured to include an integrated services digital network (ISDN) interface 113, an Ethernet interface 119 (e.g., for 28.8 kbs data, 56 kbs data, or ISDN), an IEEE 1394 "fire wire" interface 112 (e.g., for a digital videodisc device (DVD)), a TVRC modem interface 114 (e.g., for a digital subscriber line (DSL) modem), a residential interface 114, (e.g., standard POTS phone systems such as tip ring), a business interface 116 (e.g., a T1 line and/or PABX interface), a radio frequency (RF) audio/video interface 120 (e.g., a cable television connection), and a cordless phone interface 123 (e.g., a 900 MHZ transceiver). Connected to one of the network interfaces and/or the system bus 111 may be any number of devices such as an audio interface 122 (e.g., for digital audio, digital telephones, digital audio tape (DAT) recorders/players, music for restaurants, MIDI interface, DVD, etc.), a digital phone 121, a videophone / user interface 130, a television set-top device 131 and/or other devices. Where the network interface is utilized, it may be desirable to use, for example, the IEEE 1394 interface 112 and/or the Ethernet interface 119.

A lifeline 126 may be provided for continuous telephone service in the event of a power failure at the CPE 10. The lifeline 126 may be utilized to connect the ISD 22 to the local telecommunications company's central office 34 and, in particular, to the FMP 32 located in the central office 34.

The ISD may be variously configured to provide any number of suitable services. For example, the ISD 22 may offer high fidelity radio channels by allowing the user to select a particular channel and obtaining a digitized radio channel from a remote location and outputting the digital audio, for example, on audio interface 122, video phone 130, and/or digital phones 121. A digital telephone may be connected to the audio interface 122 such that a user may select any one of a number of digital audio service channels by simply having the user push a digital audio service channel button on the telephone and have the speaker phone output particular channels. The telephone may be preprogramed to provide the digital audio channels at a particular time, such as a wake up call for bedroom mounted telephone, or elsewhere in the house. The user may select any number of services on the video phone and/or other user interface such as a cable set-top device. These services may include any number of suitable services such as weather, headlines in the news, stock quotes, neighborhood community services information, ticket information, restaurant information, service directories (e.g., yellow pages), call conferencing, billing systems, mailing systems, coupons, advertisements, maps, classes, Internet, pay-per-view (PPV), and/or other services using any suitable user interface such as the audio interface 122, the video phone / user interface 130, digital phones, 121 and/or another suitable device such as a settop device 131.

In further embodiments, the ISD 22 may be configured as an IP proxy server such that each of the devices connected to the server utilizes transmission control protocol / internet protocol (TCP/IP) protocol. This configuration allows any device associated with the ISD to access the Internet via an IP connection through the FMP 32. Where the ISD 22 is configured as an IP proxy server, it may accommodate additional devices that do not support the TCP/IP protocol. In this embodiment, the ISD 22 may have a proprietary or conventional interface connecting the ISD 22 to any associated device such as to the set top box 131, the personal computer 14, the video telephone 130, the digital telephone 18, and/or some other end user device.

In still further embodiments, the ISD 22 may be compatible with multicast broadcast services where multicast information is broadcast by a central location and/or other server on one of the networks connected to the FMP 32, e.g., an ATM-switched network. The ISD 22 may download the multicast information via the FMP 32 to any of the devices connected to the ISD 22. The ISD 22 and/or CPE 10 devices may selectively filter the information in accordance with a specific customer user's preferences. For example, one user may select all country music broadcasts on a particular day while another user may select financial information. The ISD 22 and/or any of the CPE 10 devices may also be programmed to store information representing users' preferences and/or the received uni-cast or multicast information in memory or other storage media for later replay. Thus, for example, video clips or movies may be multicast to all customers in the community with certain users being preconfigured to select the desired video clip/ movie in real time for immediate viewing and/or into storage for later viewing.

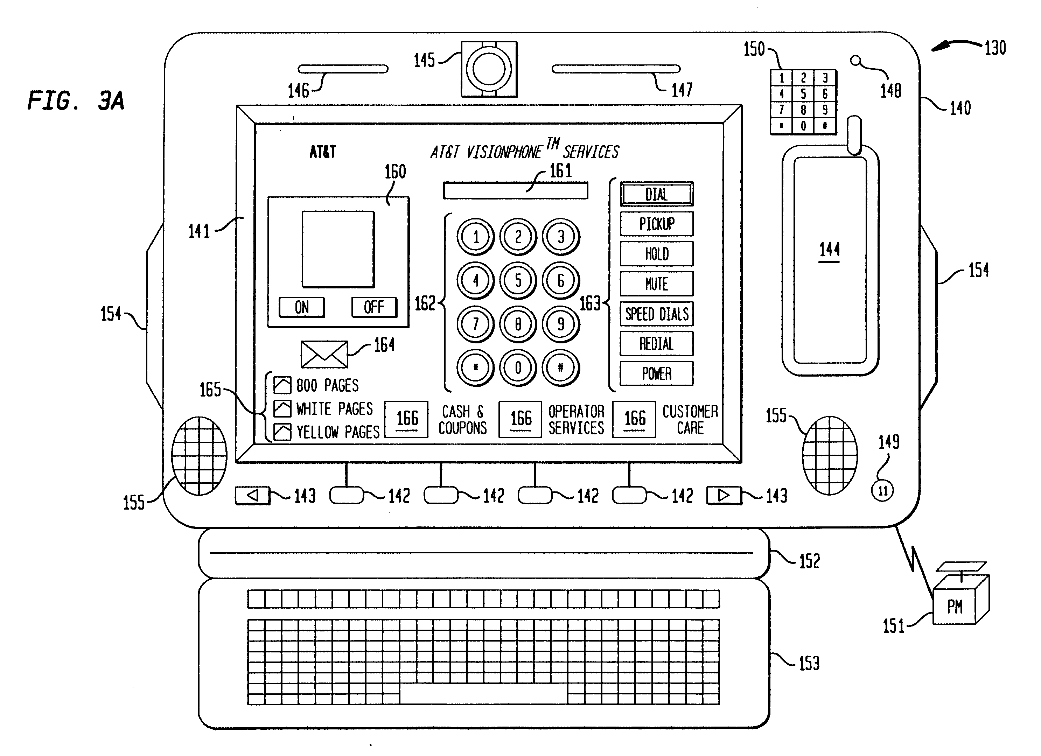

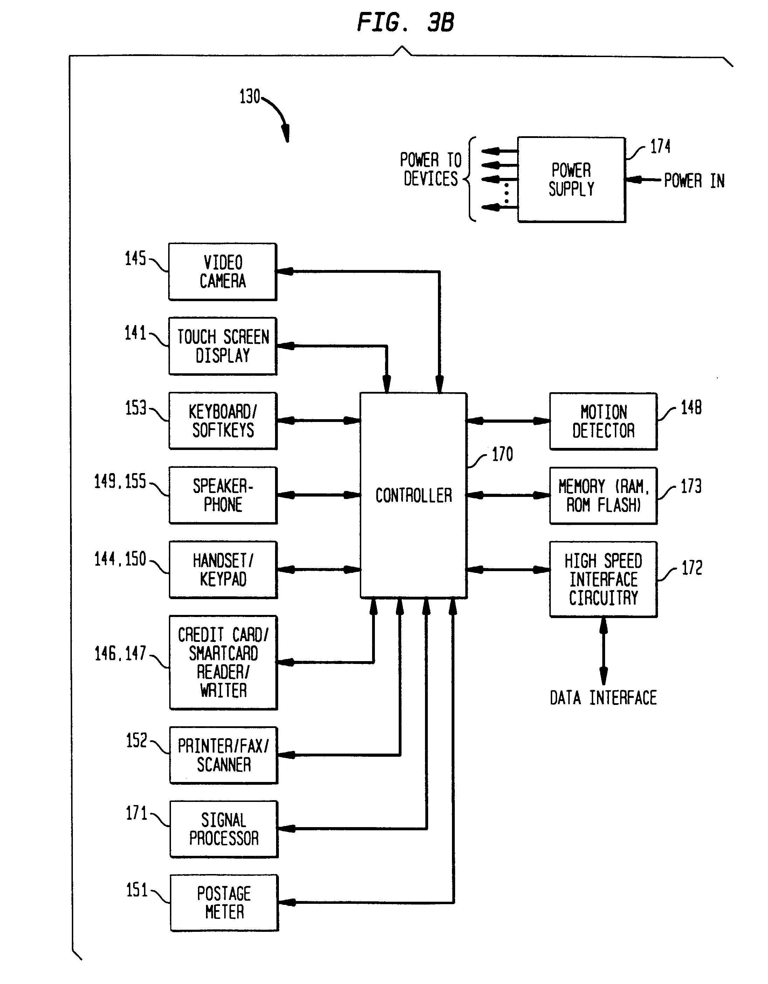

Referring to Fig. 3A, a videophone 130 may include a touch screen display 141 and soft keys 142 around the perimeter of the display 141. The display may be responsive to touch, pressure, and/or light input. Some or all of the soft keys 142 may be programmable and may vary in function depending upon, for example, the applet being run by the videophone 130. The function of each soft key may be displayed next to the key on the display 141. The functions of the soft keys 142 may also be manually changed by the user by pressing scroll buttons 143. The videophone 140 may also include a handset 144 (which may be connected via a cord or wireless connection to the rest of the videophone and/or directly to the ISD), a keypad 150, a video camera 145, a credit card reader 146, a smart card slot 147, a microphone 149, a motion and/or light detector 148, built-in speaker(s) 155, a printer/scanner/facsimile 152, and/or external speakers 154 (e.g., stereo speakers). A keyboard 153 and/or a postage scale 151 may also be connected to the videophone 130. Any or all of the above-mentioned items may be integrated with the videophone unit itself or may be physically separate from the videophone unit. A block diagram of the video phone unit is shown in Fig. 3B. Referring to Fig. 3B, in addition to the items above, the video phone 130 may also include a signal processor 171, high speed interface circuitry 172, memory 173, power supply 174, all interconnected via a controller 170.

When the videophone 130 is used as a video telephone, the display 141 may include one or more video window(s) 160 for viewing a person to whom a user is speaking and/or showing the picture seen by the person on the other end of the video phone. The display may also include a dialed-telephone-number window 161 for displaying the phone number dialed, a virtual keypad 162, virtual buttons 163 for performing various telephone functions, service directory icons 165, a mail icon 164, and/or various other service icons 166 which may be used, for example, for obtaining coupons or connecting with an operator. Any or all of these items may be displayed as virtual buttons and/or graphic icons and may be arranged in any combination. Additionally, any number of other display features may be shown on the video phone in accordance with one or more of the applications incorporated by reference below.

Referring to Fig. 4A, the FMP 32 may coordinate the flow of data packets, separate voice signals from other signals, perform line monitoring and switching functions, and/or convert between analog and digital signals. The FMP 32 may process data sent from the CPE 10 to the central or local office 34 by separating and reconstructing analog voice signals, data, and control frames. The FMP 32 may process data sent from the central or local office 34 to the CPE 10 by separating control messages from user information, and configure this information into segments that for transport across the digital subscriber loop. The FMP 32 may also terminate the link layer associated with the digital subscriber loop.

In some embodiments, the FMP 32 may include an access module 70 and a digital loop carrier 87. The access module 70 may include a line protector 71, a cross-connector 73, a plurality of TVRC modems 80, a plurality of digital filters 82, a controller multiplexer 84, and/or a router and facilities interface 86. The digital loop carrier 87 may include a plurality of line cards 96, a time domain multiplexing (TDM) multiplexor (MUX) 88, a TDM bus 90, a controller 92, and/or a facilities interface 94.

During normal operations, digital signals on the customer connection 30 (e.g., twisted-pair lines) containing both voice and data may be received by the TVRC modems 80 via the line protector 71 and the cross-connector 73. Preferably, the line protector 71 includes lightning blocks for grounding power surges due to lightning or other stray voltage surges. The TVRC modems 80 may send the digital voice and/or data signals to the controller multiplexor 84 and the digital filters 82. The digital filters 82 may separate the voice signals from the digital data signals, and the controller multiplexor 84 may then multiplex the voice signals and/or data signals received from the digital filters 82. The controller multiplexor 84 may then send multiplexed voice signals to the TDM MUX 88 and the data signals to the router and facilities interface 86 for transmission to one or more external networks. The TDM MUX 88 may multiplex the voice signals from the controller multiplexor 84 and/or send the voice signals to the TDM bus 90, which may then send the digital voice signals to the controller 92 and then to the facilities interface 94 for transmission to one or more external networks. Both the router and facilities interface 86 and the facilities interface 94 may convert between electrical signals and optical signals when a fiber optic link is utilized.

When there is a failure of the digital data link (e.g., if there is a failure of the TVRC modems 80 at the FMP 32 or the TVRC modem 114 at the ISD 22), only analog voice signals might be sent over the subscriber lines 30. In such a case, the analog voice signals may be directly routed to the line cards 96, bypassing the TVRC modems 80, the digital filters 82, the controller multiplexor 84, and the TDM MUX 88. Thus, voice communication is ensured despite a failure of the digital data link. The line cards 96 may convert the analog voice signals into digital format (e.g., TDM format) and send the digitized voice data onto the TDM bus 90 and eventually through the controller 92 and the facilities interface 94 for transmission to one or more external networks.

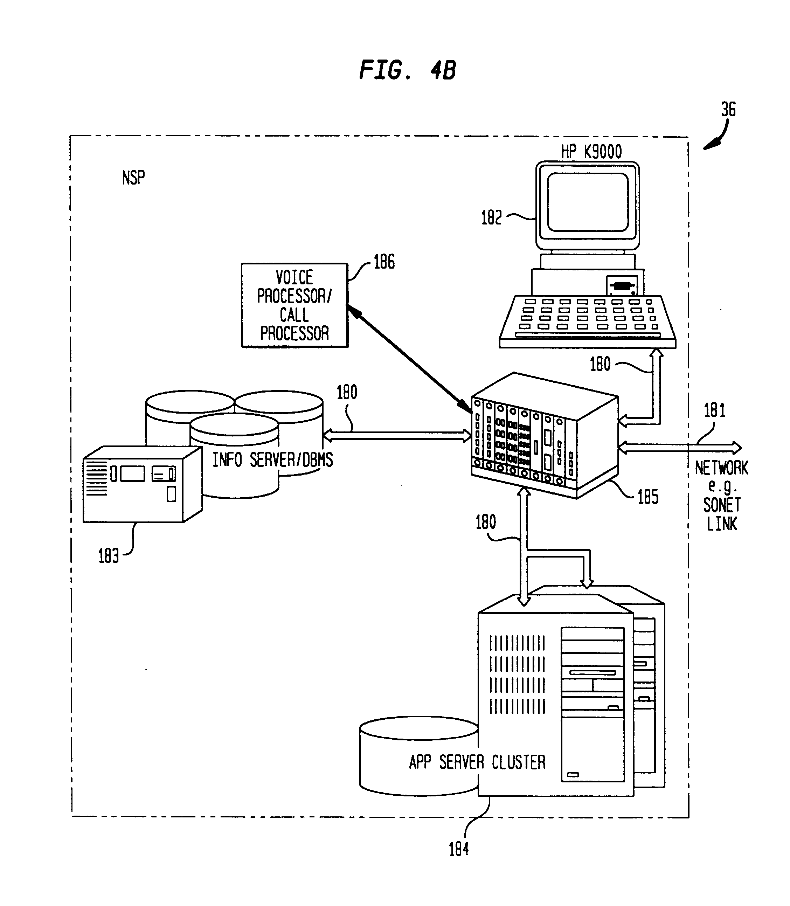

Referring to Fig. 4B, the NSP 36 may be variously configured to provide any number of services provided by a server such as information services, Internet services, pay-per-view movie services, data-base services, commercial services, and/or other suitable services. In the embodiment shown in Fig. 4B, the NSP 36 includes a router 185 having a backbone 180 (e.g., a fiber distributed data interface (FDDI) backbone) that interconnects a management server 182, an information/database server 183, and/or one or more application server clusters 184. The NSP 36 may be connected via the router 185 by a link 181 to one or more external networks, NSPs 36, and/or an FMPs 32. The information/data base server 183 may perform storage and/or database functions. The application server cluster 184 may maintain and control the downloading of applets to the ISD 22. The NSP 36 may also include a voice/call processor 186 configured to handle call and data routing functions, set-up functions, distributed operating system functions, voice recognition functions for spoken commands input from any of the ISD connected devices as well as other functions.

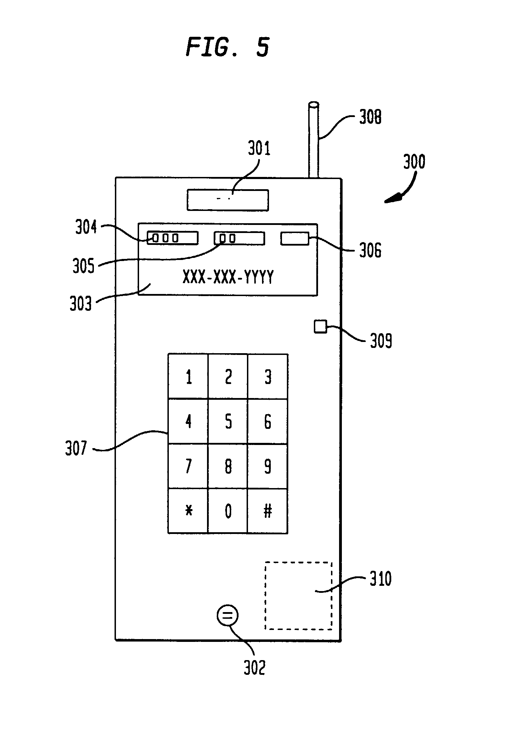

Referring to Fig. 5, a wireless phone 300 may be linked with an ISD 22 via the cordless interface 123 in the ISD 22. The wireless phone 300 may be used in conjunction with any of the features and/or functions described in any other type of communication device that may be connected to the ISD 22 as described in the applications incorporated herein by reference. The wireless phone 300 may include a speaker 301, a microphone 302, a keypad 307, a display 303 or other similar indicator(s), a global positioning device 310 (or any other type of self-locating device) and/or an antenna 308 or other wireless linking device such as a microwave transmitter/receiver. The display 303 may serve several functions, including displaying a telephone number and/or other data such as signal strengths. Furthermore, the display 303 may show a signal strength meter 304 for indicating signal strength associated with a cordless phone network, a signal strength meter 305 for indicating signal strength associated with a conventional cellular network or other wireless network, and/or a network indicator 306 for indicating to which type of network the wireless phone 300 is linked. Any or all of the meters and/or indicators may be separate elements on the wireless phone 300 and/or part of the display 303. Furthermore, one or more of the meters and/or indicators may be combined. The wireless phone 300 may also include a switch 309 for allowing a user to manually switch between a cordless phone network and another system such as a conventional cellular network. The switch 309 may alternatively be a function accessible via a menu system in the display 303. The switch 309 may be toggled to one network or the other, and/or may be use to initiate a network search mode for finding the strongest network of a certain type or of any type.

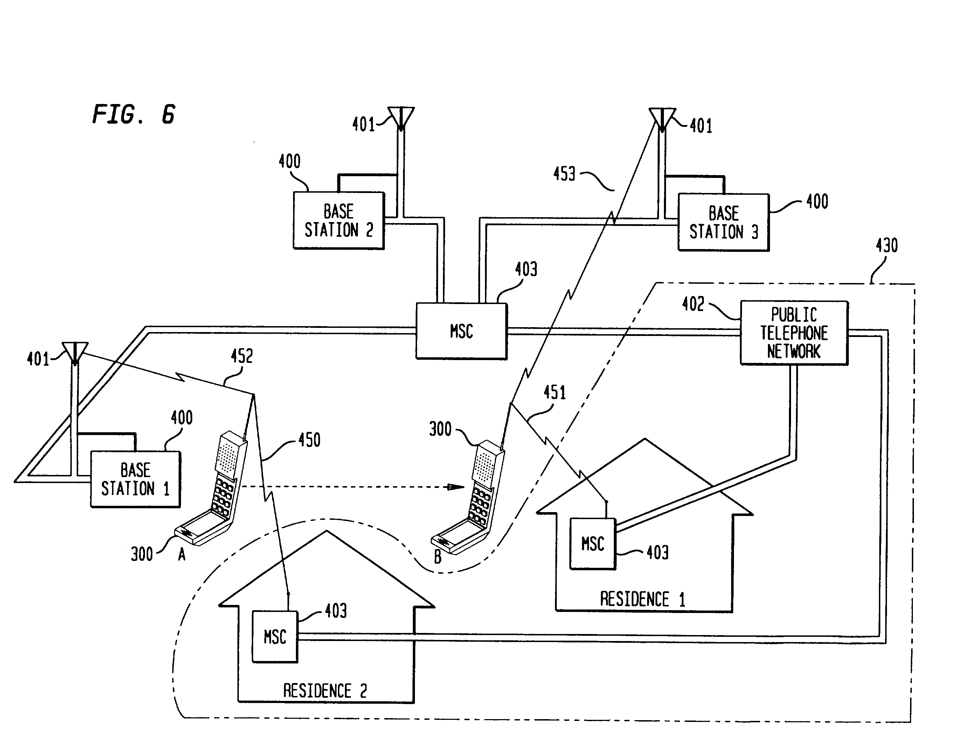

Referring to Fig. 6, a cordless phone network 430 may include a plurality of network interface units (NIUs) 403 (e.g., the NIUs 403 located at Residences 1 and 2 in Fig. 6) and/or some or all of another network such as a public telephone network 402. An NUI 403 is preferrably located at a customer premise such as a private residence and/or a business. One or more of the NIUs 403 may include one or more ISDs 22. The ISDs 22 may be coupled to the public telephone network 402 and/or may function as wireless base stations for the cordless telephone network 430. The public telephone network 402 may include and/or be coupled with the FMP 32, the NSP 36, the network 42, and/or any other network devices and/or service providers. A conventional cellular system and/or other type of wireless communication system may be coupled with the public telephone network 402. In the embodiment of Fig. 6, a conventional cellular network is shown including a mobile switching center (MSC) 403 and a plurality of base stations 400 having associated cellular base antennas 401.

The wireless phone 300 may be associated with a home ISD 22, however, the wireless phone 300 may wirelessly link with and/or roam between one or more of a plurality of ISDs 22 (including the home ISD 22) and/or base station cellular antennas 401 in any combination using any set of frequencies. Thus, the wireless phone 300 may function as a universal wireless phone having the combined features of a conventional cellular phone and a conventional cordless phone, plus other advanced features as described hereinbelow. Preferably, the wireless phone 300 may link with an ISD 22 using frequencies that are different from those frequencies used to link with a base station cellular antenna 401. The wireless phone 300 may link with an ISD 22 using conventional cordless phone communications or any other communications standards. In preferred embodiments, the wireless phone 300 may link with an ISD 22 using fequencies around the 900 MHz range. However, the frequencies that may be used in the present invention are not limited to this or to any other range. Furthermore, the wireless phone 300, the ISDs 22, the public telephone network 402, the MSC 403, the base stations 400, and/or the cellular antennas 401 may monitor wireless signal strength between the wireless phone 300 and one or more of the ISDs 22 and/or cellular antennas 401. The signal strength of many possible wireless links with many cellular antennas 401 and/or ISDs 22 may be simultaneously monitored, even if the wireless phone 300 is not actually linked with them. Based on the relative signal strengths, the wireless phone 300 may switch between wireless links with various cellular antennas 401 and/or ISDs 22.

The wireless phone 300 may travel between various locations, roaming between communication systems, ISDs 22, and/or cellular antennas 401 as required. For instance, the wireless phone 300 may start at point A (shown in Fig. 6). In some embodiments, the wireless phone 300 at point A may be wirelessly linked with, for example, the ISD 22 at residence 2 (shown as wireless link 450). Upon moving to point B, the wireless phone may roam to a wireless link with the ISD 22 at residence 1 (shown as wireless link 451). In further embodiments, the wireless phone 300 at point A may be linked with the ISD 22 at residence 2, and at point B it may roam to a link with the cellular antenna 401 associated with base station #3 400 (shown as wireless link 453). In still further embodiments, the wireless phone 300 at point A may be linked with the cellular antenna 401 associated with base station #1 400 (shown as wireless link 452), and at point B it may roam to a link with the cellular antenna 401 associated with base station #3 400. In still further embodiments, the wireless phone 300 at point A may be linked with the cellular antenna 401 associated with base station #1 400, and at point B it may roam to a link with the ISD 22 at residence 1.

In some embodiments, the wireless phone 300 may be registered with the home ISD 22 and/or one or more other ISDs 22. When a wireless phone 300 is registered with an ISD 22, the wireless phone 300 may send an identification code identifying the wireless phone 300 and/or other data such as a personal identification number (PIN) for security, the date, and/or the time. This identification code and/or other data sent by the wireless phone 300 may be used by an ISD 22 to recognize and/or establish a wireless link with the wireless phone 300. In further embodiments, an ISD 22 linked with the wireless phone 300 but not having registration information associated with the wireless phone 300 may send messages to the FMP 32. The FMP 32 may then download call support information to other third party ISDs 22 supported by the FMP 32 and/or other FMPs 32. Thus, another ISD 22 that may have registration information associated with the wireless phone may feed the registration information to the ISD 22 linked with the wireless phone 300. In further embodiments, the wireless phone may be registered with the public telephone network 402, the MSC 403, and/or one or more base stations 400. In these further embodiments, the public telephone network 402, the MSC 403, and/or one or more base stations 400 may use the identification code and/or other data sent by the wireless phone 300 to recognize and/or establish a wireless link with the wireless phone 300.

In still further embodiments, the wireless phone 300 may communicate with an ISD 22 using encryption. This encryption may serve to hinder tampering with the ISD 22 for the purposes of intercepting communications between the wireless phone 300 and the ISD 22.

In operation, when the wireless telephone 300 handles a telephone call, a first ISD 22 (e.g., using the cordless interface 123) and/or the wireless phone 300 may sense the signal strength of the wireless link with the wireless phone 300. The wireless phone 300 may send a signal periodically for indicating and/or measuring signal strength. If that signal decreases below a predetermined quality level, a message may be sent to the FMP 32 When the signal strength decreases below a predetermined service quality level, the first ISD 22 may send a message to the FMP 32 to which it is connected. The FMP 32 and/or any other portion of the public telephone network 402 may determine channels that are available on the twisted pairs 30 between the FMP 32 and the various ISDs 22 connected to the FMP 32. If an available channel exists between the FMP 32 and a second ISD 22, a query message may be sent to that ISD 22 as to whether the wireless phone 300 is detected by that particular ISD 22. If that ISD 22 senses a signal strength greater than the signal strength associated with the link supporting on the current call, the call may be handed off to the second ISD 22. This process may also occur between FMPs 32 and/or between the public telephone network 402 and the MSC 403 (or any other telephone network). Thus, the wireless phone 300 may roam directly between ISDs 22 connected to different FMPs 32. Furthermore, this process may continue until the call is out of range of any ISD 22 and/or the call terminates. The same process may occur even when no call is being handled, in which case the wireless phone 300 may be in a standby mode, waiting to receive and/or transmit calls.

In further embodiments, the wireless phone may transmit its location using a position-locating system such as the global positioning system device 310. In such a case, the wireless phone 300 may transmit data, either automatically or in reponse to a query from an ISD 22 and/or the public telephone network 402, representing the geographic location of the wireless phone 300. The public telephone network 402 may use this data, in conjunction with a database containing locations of ISDs 22, to determine which ISD 22 is closest to the wireless phone 300. The wireless phone 300 may be caused to roam between various wireless links based upon which ISD 22 is found to be closest to the wireless phone 300.

The wireless phone 300 may also roam between a wireless link with an ISD 22 and a link with another communication system such as a conventional cellular network. This may be useful, for instance, when the wireless phone 300 moves out of wireless range from any ISD 22 (e.g., in a rural area), since ISDs 22 of the cordless telephone network 430 may individually have a smaller operating distance range than the cellular antennas of a conventional cellular network. In some embodiments, the wireless phone 300 may prefer a particular communication system. For example, the wireless phone 300 may automatically (or via manual control by the user of the switch 309) give priority to a link with the cordless phone network 430 over a link with a conventional cellular phone network. In further embodiments, the wireless phone 300 may give preference to the home ISD 22 over any other ISD 22.

In further embodiments, the wireless phone 300 may accept user identification data input by a user (e.g., via the keypad 307). This user identification data may identify a particular user who is using the wireless phone 300. The wireless phone 300 may pass this user identification data on to, for instance, the public telephone network 402. The public telephone network 402 may use the user identification data to bill a call by that user to that user's telephone account.

The following applications, filed concurrently herewith, are hereby incorporated by reference:
1. A Hybrid Fiber Twisted-pair Local Loop Network Service Architecture (Gerszberg 41-3-13);
2. Dynamic Bandwidth Allocation for use in the Hybrid Fiber Twisted-pair Local Loop Network Service Architecture (Gerszberg 42-4-14);
3. The VideoPhone (Gerszberg 43-9-2);
4. VideoPhone Privacy Activator (Gerszberg 44-10-3);
5. VideoPhone Form Factor (Gerszberg 45-11-4);
6. VideoPhone Centrally Controlled User Interface With User Selectable Options (Gerszberg 46-12-5);
7. VideoPhone User Interface Having Multiple Menu Hierarchies (Gerszberg 47-13-6);
8. VideoPhone Blocker (Gerszberg 79-38-26);
9. VideoPhone Inter-com For Extension Phones (Gerszberg 48-14-7);
10. Advertising Screen Saver (53-17);
11. VideoPhone FlexiView Advertising (Gerszberg 49-15-8);
12. VideoPhone Multimedia Announcement Answering Machine (Gerszberg 73-32-20);
13. VideoPhone Multimedia Announcement Message Toolkit (Gerszberg 74-33-21);
14. VideoPhone Multimedia Video Message Reception (Gerszberg 75-34-22);
15. VideoPhone Multimedia Interactive Corporate Menu Answering Machine Announcement (Gerszberg 76-35-23);
16. VideoPhone Multimedia Interactive On-Hold Information Menus (Gerszberg 77-36-24);
17. VideoPhone Advertisement When Calling Video Non-enabled VideoPhone Users (Gerszberg 78-37-25);
18. Motion Detection Advertising (Gerszberg 54-18-10);
19. Interactive Commercials (Gerszberg 55-19);
20. VideoPhone Electronic Catalogue Service (Gerszberg 50-16-9);
21. A Facilities Management Platform For Hybrid Fiber Twisted-pair Local Loop Network, Service Architecture (Barzegar 18-56-17);
22. Multiple Service Access on Single Twisted-pair (Barzegar (16-51-15);
23. Life Line Support for Multiple Service Access on Single Twisted-pair (Barzegar 17-52-16);
24. A Network Server Platform (NSP) For a Hybrid Fiber Twisted-pair (HFTP) Local Loop Network Service Architecture (Gerszberg 57-4-2-2-4);
25. A Communication Server Apparatus For Interactive Commercial Service (Gerszberg 58-20-11);
26. NSP Multicast, PPV Server (Gerszberg 59-21-12);
27. NSP Internet, JAVA Server and VideoPhone Application Server (Gerszberg 60-5-3-22-18);
28. NSP WAN Interconnectivity Services for Corporate Telecommuters (Gerszberg 71-9-7-4-21-6);
29. NSP Telephone Directory White-Yellow Page Services (Gerszberg 61-6-4-23-19);
30. NSP Integrated Billing System For NSP services and Telephone services (Gerszberg 62-7-5-24-20);
31. Network Server Platform / Facility Management Platform Caching Server (Gerszberg 63-8-6-3-5);
32. An Integrated Services Director (ISD) For HFTP Local Loop Network Service Architecture (Gerszberg 72-36-22-12);
33. ISD and VideoPhone Customer Premise Network (Gerszberg 64-25-34-13-5);
34. ISD Wireless Network (Gerszberg 65-26-35-14-6);
35. ISD Controlled Set-Top Box (Gerszberg 66-27-15-7);
36. Integrated Remote Control and Phone (Gerszberg 67-28-16-8);
37. Integrated Remote Control and Phone User Interface (Gerszberg 68-29-17-9);
38. Integrated Remote Control and Phone Form Factor (Gerszberg 69-30-18-10) ;
39. VideoPhone Mail Machine (Attorney Docket No. 3493.73170);
40. Restaurant Ordering Via VideoPhone (Attorney Docket No. 3493.73171);
41. Ticket Ordering Via VideoPhone (Attorney Docket No. 3493.73712);
42. Multi-Channel Parallel/Serial Concatenated Convolutional Codes And Trellis Coded Modulation Encode/Decoder (Gelblum 4-3);
43. Spread Spectrum Bit Allocation Algorithm (Shively 19-2);
44. Digital Channelizer With Arbitrary Output Frequency (Helms 5-3);
45. Method And Apparatus For Allocating Data Via Discrete Multiple Tones (filed 12/22/97, Attorney Docket No. 3493.20096--Sankaranarayanan 1-1);
46. Method And Apparatus For Reducing Near-End Cross Talk In Discrete Multi-Tone Modulators/Demodulators (filed 12/22/97, Attorney Docket No. 3493.37219--Helms 4-32-18).

In addition, the following two patent applications are hereby incorporated by reference:
1. U.S. Patent Application 08/943,312 filed October 14, 1997 entitled Wideband Communication System for the Home, to Robert R. Miller, II and Jesse E. Russell, and
2. U.S. Patent Application No. 08/858,170, filed May 14, 1997, entitled Wide Band Transmission Through Wire, to Robert R. Miller, II, Jesse E. Russell and and Richard R. Shively.

## Claims

1. A phone characterized in that the phone is configured to roam between a plurality customer premise base stations utilizing at a first set of frequencies and a plurality of cellular base stations utilizing a second set of frequencies different from the first set of frequencies.

2. The phone of claim 1 further characterized in that the first set of frequencies includes frequencies of about 900 MHZ.

3. The phone of claim 2 further characterized in that the phone includes a 900 MHZ signal strength meter.

4. The phone of any of the preceding claims further characterized in that the phone includes a locating device for determining a location of the phone.

5. The phone of any of the preceding claims further characterized in that the phone includes a switch for switching between the plurality of customer premise base stations and the plurality of cellular base stations.

6. The phone of any of the preceding claims further characterized in that at least one of the customer premise base stations includes a network interface unit having a wireless interface, the network interface unit being located at a customer premise and being connected to a telephone network via a high speed modem.

7. The phone of any of the preceding claims further characterized in that the phone links with at least one of the plurality of customer premise base stations and the plurality of cellular base stations responsive to a signal strength between the phone and at least one of the plurality of customer premise base stations and the plurality of cellular base stations.

8. The phone of any of the preceding claims further characterized in that the phone links with at least one of the plurality of customer premise base stations and the plurality of cellular base stations responsive to a location of the phone.

9. A method for communicating using a phone, the method characterized by roaming between a plurality customer premise base stations utilizing at a first set of frequencies and a plurality of cellular base stations utilizing a second set of frequencies different from the first set of frequencies.

10. The method of claim 9 further characterized in that the first set of frequencies includes frequencies of about 900 MHZ.

11. The method of claim 10 further characterized in that the method includes displaying a 900 MHZ signal strength on a meter disposed on the phone.

12. The method of any of the preceding claims further characterized in that the method includes locating the phone using a locating device disposed in the phone.

13. The method of any of the preceding claims further characterized in that the method includes switching between the plurality of customer premise base stations and the plurality of cellular base stations using a switch disposed in the phone.

14. The phone of any of the preceding claims further characterized in that the method includes linking with at least one of the plurality of customer premise base stations and the plurality of cellular base stations responsive to a signal strength between the phone and at least one of the plurality of customer premise base stations and the plurality of cellular base stations.

15. The method of any of the preceding claims further characterized in that the method includes linking with at least one of the plurality of customer premise base stations and the plurality of cellular base stations responsive to a location of the phone.
